# EUROPÄISCHE PATENTANMELDUNG

(11) **EP 0 814 449 A1**
(43) Veröffentlichungstag der Anmeldung: **29.12.1997**
(21) Anmeldenummer: 97109001.4
(22) Anmeldetag: 04.06.1997
(51) Int. Cl.: G09B 9/22, G10K 15/02, H04S 3/00

(54) **Flugsimulator und Verfahren zur Simulation von Flugzuständen**

(30) Priorität: 18.06.1996 DE 19624307
(71) Anmelder: EUROCOPTER DEUTSCHLAND GmbH, D-81663 München (DE)
(72) Erfinder: Schulze, Stefan, 81369 München (DE)
(74) Vertreter: Hummel, Adam

(57) **Zusammenfassung**

Der Flugsimulator besteht aus einer Kabine, in der ein Flugzeugcockpit mit allen zur Steuerung eines Flugzeuges erforderlichen Instrumenten und Bedienungsorganen eingebaut ist und aus einem Computer zur Simulation einer Vielzahl von Flugzeugzuständen, die von den Instrumenten angezeigt werden, wobei der Flugsimulator von einer Vielzahl von Lautsprechern umgeben ist, die mit einem Tongenerator verbunden sind, der vom Computer ansteuerbar ist, so daß die Lautstärke eines jeden Lautsprechers einzeln einstellbar ist.

## Beschreibung

Die vorliegende Erfindung betrifft einen Flugsimulator, bestehend aus einer Kabine, in der ein Flugzeugcockpit mit allen zur Steuerung des Flugzeugs erforderlichen Instrumenten und Bedienungsorganen eingebaut ist und mit einem Computer zur Simulation einer Vielzahl von Flugzuständen, die von den Instrumenten angezeigt werden sowie ein Verfahren zur Simulation von Flugzuständen mittels dieses Flugsimulators.

Flugsimulatoren, die der Aus- oder Weiterbildung von Piloten dienen und computergesteuert eine Vielzahl von Flugzuständen simulieren sind vielfältig bekannt. So beschreibt die EP-A-370903 einen Flugsimulator, bei dem ein am Boden stehendes Flugzeug verwendet wird, in dem die einzelnen Flugzustände von den Bordinstrumenten computergesteuert angezeigt, d h. simuliert werden. Der Computer ist dabei auch in der Lage, Einblendungen in die Seitenscheiben und die Vorderscheibe des Cockpits vorzunehmen, so daß der Pilot den Eindruck gewinnt, sich bei bestimmten simulierten Situationen in der Luft zu befinden. Die vom Piloten an die Bedienungsorgane eingegebenen Steuerbefehle werden dem Computer zugeführt und von diesem berechnet.

Die US-A 4057913 beschreibt eine Trainingsanordnung zur Bekämpfung von Schiffen, bei denen ein Flugzeug mit einer Vielzahl von Empfängern versehen ist sowie mit einem an Bord mitgeführten Computer, der mit einem Sender versehen ist und im Wasser verteilte akustische Generatoren ansteuert, so daß diese zu vorgegebenen Zeitpunkten Geräusche erzeugen, wie sie von Schiffen abgegeben werden; diese Geräusche werden wiederum von an an Bord des sich in der Luft befindlichen Flugzeugs angeordneten Empfängern empfangen und simulieren damit ein Ziel, welches die in der Luft befindlichen Piloten bekämpfen sollen.

Die EP-A 416318 beschreibt eine Einrichtung zur Registrierung von Flugwegen und Flugmanövern von Flugzeugen zwecks nachträglicher Simulation beim gewohnten Training; zu diesem Zweck ist am Flugzeug ein datensammelndes Gerät angebracht, das zur Aufzeichnung von Flugwegen und Flugzuständen dient. Eine Bodenstation stellt dann die Nachflugbesprechung anschaulich dar. Hierbei erfolgt keine eigentliche Simulation von Flugzuständen, sondern eine Sammlung von Daten während des Fluges, welches die Reaktionen des Piloten auf bestimmte Flugzustände aufzeichnet.

Die ortsfesten, d. h. die am Boden angeordneten Flugsimulatoren können bisher Bewegungen nur mit einem mechanischen Bewegungssystem simulieren, welches üblicherweise sehr aufwendig und teuer ist. Aus diesem Grunde beschränken sich viele Simulatoren auf die rein visuelle Bewegungssimulation, d. h. auf ein reines Sichtsystem. Der Simulator steht dabei fest am Boden, so daß der Pilot, wenn er z. B. zum Navigieren nicht seinen Blick auf die Außenansicht richtet, keinerlei unmittelbare Informationen über etwaige Lageänderungen erhält. Solche Bewegungen werden im realen Flugzustand durch das Gleichgewichtsgefühl des Piloten permanent registriert und nötigenfalls sofort korrigiert. Fehlt diese Information, so werden die vom Piloten vorgenommenen Steuereingaben zeitlich verzögert, wodurch der Realismus deutlich abgesenkt wird.

Aufgabe der vorliegenden Erfindung ist es, einen Flugsimulator und ein Verfahren zur Simulation von Flugzuständen mittels dieses Flugsimulators zu schaffen, bei dem die sonst durch das Gleichgewichtsgefühl des Piloten registrierten Flugbewegungen akustisch simuliert werden.

Die Lösung dieser Aufgabe erfolgt mit den in den kennzeichnenden Teilen der Ansprüche 1 und 3 angegebenen Merkmalen; vorteilhafte Weiterbildungen des erfindungsgemäßen Verfahrens sind in den Unteransprüchen beschrieben.

Mit dem erfindungsgemäßen Flugsimulator und dem erfindungsgemäßen Verfahren wird durch Verwendung mehrerer Lautsprecher der Vorteil erzielt, daß die vom Tongenerator erzeugten und von den Lautsprechern abgestrahlten Geräusche (idealerweise Fluggeräusche) so wiedergegeben werden, daß einzelne Geräuschquellen ortbar sind aufgrund des dabei auftretenden Stereoeffektes. Durch gezielte Lautstärkeänderung der einzelnen Kanäle kann dabei die empfundene Richtung der Schallquellen räumlich bewegt werden. Eine Kopplung dieser virtuellen Bewegung mit der vom Simulator berechneten Bewegung des Flugzeuges gibt dem Piloten eine akustische Bewegungsinformation. Diese Information, die bei realen Flugzuständen nicht existiert, ersetzt die fehlende Stimulation des Gleichgewichtssinnes des Piloten.

Die Fähigkeit des Menschen, räumlich zu hören, wurde bei der Simulation von Flugzuständen bisher nicht genutzt, da sie bei Flugzeugen im Einsatz nur eine untergeordnete Rolle spielt. Erfindungsgemäß wird diese Fähigkeit eingesetzt, um auf einfache und kostengünstige Weise dem Piloten akustisch die fehlende Bewegungsinformation zu suggerieren, d. h. diese zu simulieren.

Im folgenden wird die Erfindung anhand der Zeichnung näher erläutert, in der vorteilhafte Ausführungsbeispiele dargestellt sind. Es zeigen
Figur 1 das Schema einer erfindungsgemäßen Simulation am Beispiel eines Hubschraubersimulators,
Figur 2 eine Draufsicht auf einen praktischen Simulator,

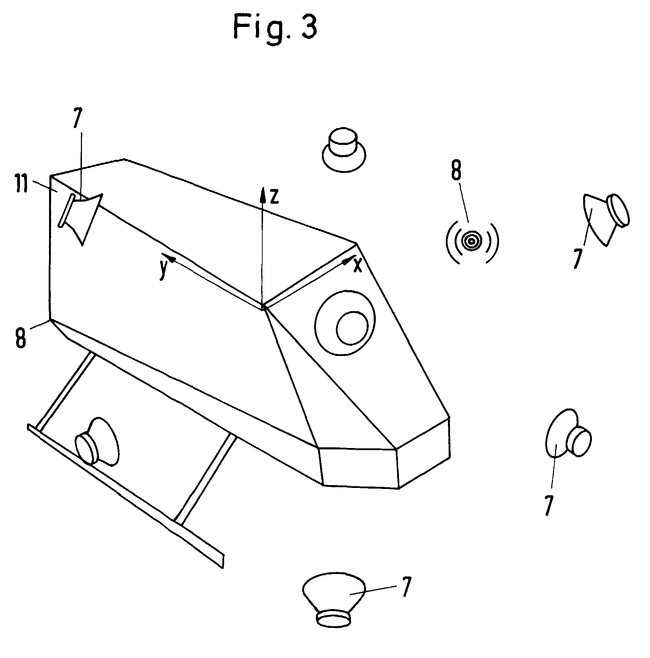

Figur 3 eine perspektivische Ansicht dieses Simulators und
Figur 4 ein weiteres Ausführungsbeispiel.

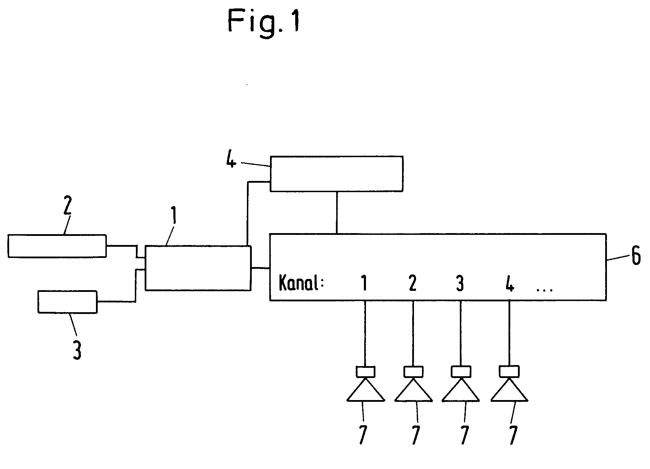

Bei der in Figur 1 dargestellten schematischen Darstellung der wesentlichen Teile eines Simulators ist mit 1 die Anordnung zur Simulation der Flugmechanik mit der Rotorsimulation bezeichnet, mit 2 die Steuereingabe, mit der der Pilot, der im Simulator sitzt, die verschiedenen Flugzustände steuert und mit 3 die in einem Computer gespeicherten, abrufbaren, die Umwelteinflüsse darstellenden Daten. Mit 6 ist ein mit einem Tongenerator verbundener Computer bezeichnet, dem außerdem Signale von der Triebwerkssimulation 4 zugeführt werden, wobei der Computer über den Tongenerator und die verschiedenen Ausgangskanäle eine Vielzahl von Lautsprechern 7 einzeln ansteuert, welche in geeigneter Weise um den Flugsimulator herum räumlich verteilt sind.

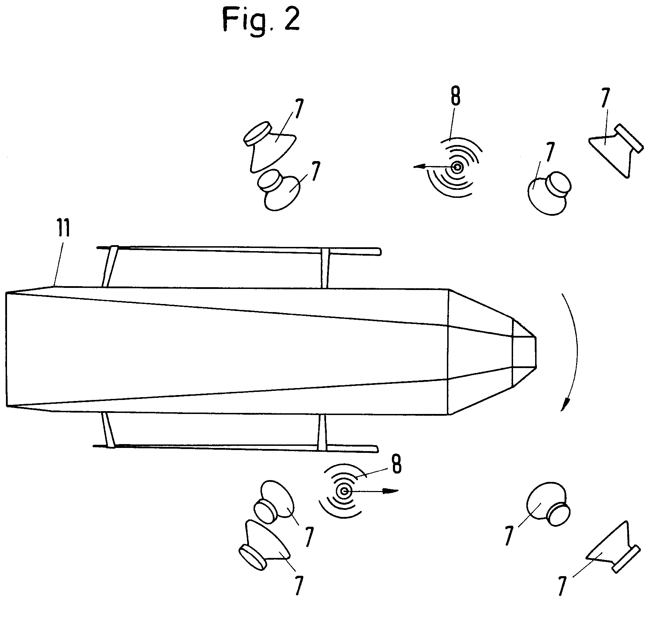

Diese räumliche Verteilung ist in den Figuren 2 (in Draufsicht) und 3 (in perspektivischer Ansicht) zu erkennen.

Die einzelnen Lautsprecher 7, welche den Simulator umgeben, erzeugen beliebig vorwählbare Geräusche, z. B. Pfeifgeräusche oder Fluggeräusche, dergestalt, daß von einem im Simulatorgehäuse 11 befindlichen Piloten einzelne Geräuschquellen geortet werden können. Durch gezielte Lautstärkeänderung der einzelnen Kanäle kann die vom Piloten empfundene Richtung der Schallquellen 7 räumlich bewegt werden, so daß mit 8 angedeutete virtuelle Schallquellen entstehen, die wahrgenommen werden. Eine Kopplung dieser virtuellen Bewegung der Lautsprecher mit der vom Simulator berechneten Bewegung des Flugzeuges gibt dem Piloten nun die gewünschte akustische Bewegungsinformation anstelle der in einem tatsächlich fliegenden Flugzeug empfundenen Gleichgewichtsveränderungen.

Die vom Piloten in die Steuereingabe 2 eingegebenen Befehle werden in Wechselwirkung mit vorgegebenen vom Speicher 3 stammenden Umwelteinflüssen im Flugmechanikmodul 1 und im Computer 6 ausgewertet und dadurch die zugehörige Fluglage und die Bewegung berechnet. Diese Information wiederum wird an den Computer 6 und an den Tongenerator weitergeben; dort wird die Geräuschkulisse mit Hilfe der Triebwerkssimulation 4 entsprechend berechnet und das Signal auf die einzelnen Lautsprecher 7 verteilt.

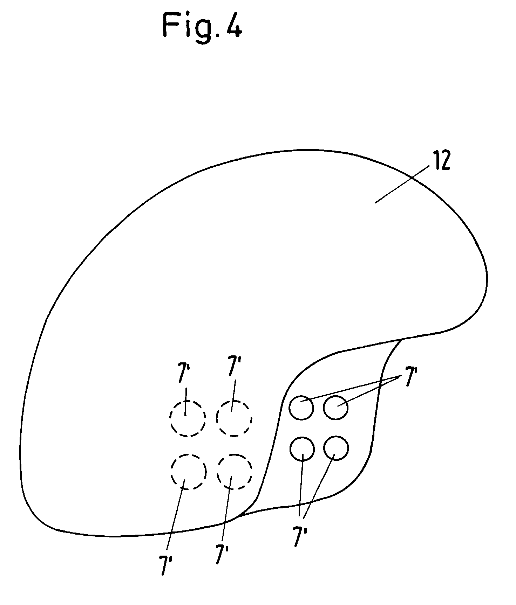

Anstelle einer ortsfesten Kabine kann selbstverständlich auch eine dreidimensional beweglich aufgehängte Kabine verwendet werden, bei der also durchaus das Gleichgewichtsgefühl des Piloten die übliche Rolle spielt, wobei nunmehr die Geräusche, z. B. Pfeifgeräusche eine unterstützende Funktion bei seiner Ausbildung ausüben. Ferner ist es auch möglich, wie es in Figur 4 angedeutet ist, den Piloten mit einem Kopfhörer oder einem Helm 12 zu versehen, der mit einer Vielzahl von darin fest angeordneten Lautsprechern 7' versehen ist, so daß auch hier dem Piloten Geräusche, z. B. Fluggeräusche oder Pfeifgeräusche von den einzelnen Lautsprechern 7' zugeführt werden, die genau die gleiche Wirkung haben, wie die von den im Abstand vom Piloten angeordneten einzeln ansteuerbaren Lautsprechern 7' gemäß dem vorhergehenden Ausführungsbeispiel.

In diesem Fall kann sogar ein Einsatz der erfindungsgemäßen Vorrichtung in einem fliegendem Gerät, z. B. in einem Hubschrauber oder auch in einem Flugzeug während des Einsatzes erfolgen, wobei dann zusätzliche Geräusche zur Simulation bestimmter Flugzustände dem Piloten durch die im Helm oder Kopfhörer 12 eingebauten Lautsprecher 7' zuführbar sind. Anstelle von Fluggeräuschen oder Pfeifgeräuschen sind auch andere, der Ausbildung nützliche Geräusche denkbar.

Hiermit wird erstmalig eine Vorrichtung und ein Verfahren geschaffen, mit dem die Fähigkeit des Menschen, räumlich zu hören, auf einfache und kostengünstige Weise bei der Pilotenausbildung genutzt wird, indem akustisch die fehlende Bewegungsinformation simuliert wird.

## Patentansprüche

1. Flugsimulator, bestehend aus einer Kabine, in der ein Flugzeugcockpit mit allen zur Steuerung eines Flugzeuges erforderlichen Instrumenten und Bedienungsorganen eingebaut ist, und aus einem Computer zur Simulation einer Vielzahl von Flugzuständen, die von den Instrumenten angezeigt werden, dadurch gekennzeichnet, daß der Flugsimulator von einer Vielzahl von Lautsprechern umgeben ist, die mit einem Tongenerator verbunden sind, der vom Computer ansteuerbar ist, so daß die Lautstärke eines jeden Lautsprechers einzeln einstellbar ist.

2. Flugsimulator, bestehend aus einer Kabine, in der ein Flugzeugcockpit mit allen zur Steuerung eines Flugzeugs erforderlichen Instrumenten und Bedienungsorganen eingebaut ist und aus einem Computer zur Simulation einer Vielzahl von Flugzuständen, die von den Instrumenten angezeigt werden, dadurch gekennzeichnet, daß in der Kabine ein Helm oder Kopfhörer für den Piloten angeordnet ist, der eine Vielzahl von Lautsprechern aufweist, die mit einem Tongenerator verbunden sind, der vom Computer ansteuerbar ist, so daß die Lautstärke eines jeden Lautsprechers einzeln einstellbar ist.

3. Verfahren zur Simulation von Flugzuständen mittels eines Flugsimulator nach Anspruch 1 und 2, dadurch gekennzeichnet, daß ausgewählte Lautsprecher vom Computer derart angesteuert werden, daß sie Geräusche, insbesondere Fluggeräusche erzeugen, die vom Piloten als einzelne Geräuschquellen ortbar werden, wobei durch gezielte Lautstärkeänderungen der einzeln angesteuerten Lautsprecher die wahrgenommene Richtung, aus der die Fluggeräusche stammen, räumlich bewegt wird.

4. Verfahren nach Anspruch 1 und 2, dadurch gekennzeichnet, daß die als Folge der wahrgenommenen Lautstärkeänderungen vom Piloten durchgeführten Steuereingaben in Wechselwirkung mit vorgegebenen, dem Computer zugeführten Umwelteinflüssen vom Computer ausgewertet werden, der die zugehörige Fluglage und Bewegung berechnet und diese Ergebnisse sowohl den Instrumenten zuführt, als auch dem Tongenerator, der die Lautsprecher ansteuert.
